# EUROPEAN PATENT SPECIFICATION

(11) **EP 3 984 422 B1**
(45) Date of publication and mention of the grant of the patent: **02.08.2023**
(21) Application number: 20202462.6
(22) Date of filing: 19.10.2020
(51) Int. Cl.: A47J 31/44, A47J 31/46

(54) **WATER TANK OF A BEVERAGE MACHINE**
WASSERTANK EINER GETRÄNKEMASCHINE
RÉSERVOIR D'EAU POUR UN AUTOMATE DE BOISSONS

(43) Date of publication of application: 20.04.2022
(73) Proprietor: BSH Hausgeräte GmbH, 81739 München (DE)
(72) Inventor: Gortnar, Primoz, 1215 Medvode (SI); Krumpak, Matic, 3211 Skofja vas (SI); Solar, Lovro, 3330 Mozirje (SI)

(56) References cited:
- WO-A1-2014/071856
- CN-A- 110 028 116
- CN-A- 110 150 992
- DE-U1- 9 319 872

## Description

The present invention relates to a beverage machine with a removable water tank, particularly to the coffee machine having a removable water tank equipped with a water valve that stops the water drainage when the water tank has been removed from the machine.

Coffee machines usually have a removable water tank that can be easy placed under a tap, for example for filling a water. In order to be connected to the coffee machine in a fluid-connected manner, it is mostly inserted vertically in the coffee machine and connected to an inlet on the coffee machine via a bottom outlet that is arranged in the tank. So, it is really convenient for a user, to fill the tank with the water because a user can remove it from the appliance, also doesn't risk spills, which prevents any mess on the countertop. Additionally the removable tank offers a simple and convenient cleaning process. Such removable water tanks are usually provided with a valve that stop the water drainage from the tank when is has been removed from the appliance. In that way the water collected in the tank doesn't flood surroundings. When the water tank is connected back to the appliance, the valve is automatically opened to feed the appliance with the water from the water tank.

The document GB2125276 (A) discloses an electric coffee machine comprises a cold water pipe for conducting water from a freshwater container to a water heater, from which a hot water pipe leads to an outlet above a coffee filter. The container has a bottom with a round outlet opening into the stub pipe, through which opening a valve shank projects and at its upper end portion carries a resilient sealing plate snap-fitted into an annular groove. Formed at the lower end of the shank is a rib star, the upper side of which co-operates with a valve spring bearing against the bottom of the container and the underside of which cooperates with an upper narrowed closing portion of the end portion of the hose. When the container is inserted, the star lifts the sealing plate from its seat against the force of the valve spring and makes possible the through flow of water.

The document EP0404688 (A1) discloses a removable water tank for domestic appliance and domestic appliance provided with such tank. The water tank is intended to be placed on a base of the appliance in the vicinity of the body of the latter. It comprises in its upper part a movable cover. The cover is shaped so as to serve, in its open position, as a handle for handling the tank. The water tank has in its bottom an eccentric opening, closed by a valve when the reservoir is not placed on the base. The valve, intended to be lifted upwards against the action of a spring by a projecting element of the base, comprises a piston movable inside a cylindrical tube projecting under the bottom. The rod of the piston passes through the opening of the bottom and carries above the bottom an elastic seal applied to a shoulder of the bottom when the tank is not on the base. The rod has a longitudinal groove for the passage of water from the reservoir into the base when the valve is raised.

WO2015136367 (A2) discloses a brewable beverage making machine includes a brewing chamber assembly for holding a brewable substance therein, the brewing chamber assembly including inlet openings for supply of an input liquid therein, an outlet opening at an upper end thereof, and a discharge opening for discharging the brewed liquid, the inlet openings being sized and oriented to cause turbulent agitation; a heater which heats the input liquid supplied to the brewing chamber assembly; an pump for supplying heated liquid from the heater through the inlet openings; a first valve connected with the outlet opening; and a microprocessor which opens the first valve during initial filling of the brewing chamber assembly with the heated liquid and closes the first valve when the heated liquid reaches a predetermined level in the brewing chamber assembly to cause pressurization of the heated liquid in the brewing chamber assembly during a brewing operation. A water tank is provided for supplying water for brewing purposes. The water tank has at a central opening and an annular valve holding boss that extends down from the lower surface of the water tank in surrounding relation to central opening. The tank valve slidably fits within annular valve holding boss. The said valve preventing escape of water through central opening. In order to provide a water tight sealing action, a coil spring is provided in surrounding relation to tank valve and a gasket ring, with the upper end of coil spring in contact with the lower surface of the water tank, and the lower end of coil spring in contact with the upper surface of annular base ring. This serves to pull gasket ring in tight sealing contact with the lower surface of the water tank.

CN110028116A discloses the preamble of claim 1.

From the above mentioned documents are generally known two versions of the type of sealing ring used in the aforementioned valves, one with O-ring gasket seal which is more reliable over long time but needs a stronger spring, and the second one, with flat gasket which is cheaper, but less reliable compare to valves with O-ring gasket. In addition, the water tank valve with a stronger spring and the O-ring seal requires accurate guidance of the valve body because of the critical importance of lateral movement of the valve for it accurate closure. Because of the limited space in the valve guidance area the water can stay in this area after closing the water tank valve, and then when the water tank is removed from the machine it might flow out, for instance, onto the table, what the user might misinterpret as damage of the water tank. Known from the state of the art solutions do not solve the mentioned problem.

The object of the present invention is to eliminate the drawbacks of the known beverage machines with a removable water tank, particularly the coffee machine having a removable water tank equipped with a water tank valve and propose the water tank with the water valve, which make it possible to easily and immediately drain away the resident water from the valve guidance area, after the water tank valve is closed.

In accordance with the present invention, there is provided a water tank of an automatic beverage machine, in particular an automatic coffee machine, with a container and a cover closing off the top of the said container, and a container bottom closing off the bottom of the container, and the bottom with a lower surface comprises an opening and an annular valve holding boss with a substantially cylindrical inner surface that extends down from the lower surface in surrounding relation to the opening with a shoulder and inside the annular valve holding boss a tank valve is provided, which slidably fits within the inner surface of the annular valve holding boss, wherein the tank valve has an elongated vertical body, that on an upper end comprises a gasket that tightly closes the opening when the tank is removed from the beverage machine, and a base ring arranged on a lower end of the body which guides the sliding movement of the tank valve inside the annular valve holding boss, and the inner cylindrical surface of the annular valve holding boss comprises at least one groove shaped recess in relation to the annular valve holding boss, wherein the recess is provided such that water or air can flow through the recess between the base ring of the tank valve and the annular valve holding boss.

Beverage machine, for instance coffee machines employ different systems for preparing beverages such as coffee, tea, chocolate or other beverage. During the beverage preparation process a fresh water portion is delivered to the system for preparing beverages. Usually, the supply of fresh water is kept in a water tank that which is part of the machine. The possibility of detaching the water tank from the machine significantly improves the convenience of use, as the water tank can be easily filled directly under the tap. In this case the water tank usually comprises a water valve that is opened when the water tank is placed on the machine and the water can be supplied to system for preparing beverages, otherwise i.e. when the water tank is removed from the machine the water valve is closed to stop draining the water from the water tank. After closing the water valve some drops of water may remain inside the valve holding boss in the water valve area, that then can be released in an undesirable way for instance when the user place the water tank on the table for a while. For this reason the inner cylindrical surface of the annular valve holding boss comprises at least one groove shaped recess in relation to the annular valve holding boss, wherein the recess is provided such that water or air can flow through the recess between the base ring of the tank valve and the annular valve holding boss. It provides space that allows the airflow necessary to drain all water from the valve holding boss. The positive effect is that the all water is drained just after closing the water valve so it stay in the beverage machine where can be easy drained to the drip tray. Moreover presented solution is easy to implement in the production and this does not increase production costs.

In the preferred embodiment of the groove shaped recess of the inner cylindrical surface extends from a lower edge of the inner surface of the annular valve holding boss and is limited from above by the shoulder upon which a coil spring of the tank valve rests and the said recess is parallel to an axis of the annular valve holding boss. The positive effect is that the inner space that is limited by the inner surface is ventilated along its entire length along its longitudinal axis. The solution is cheap because it can be produced in injection molding process.

In the another preferred embodiment a depth the recess increases gradually starting from its end adjacent to the shoulder towards to a second end of the recess, therefore the groove is easy to form, without using complicated, thereby expensive tools.

Preferable the annular valve holding boss comprises several groove shape recesses which are distributed regularly around the axis of the annular valve holding boss. The positive effect is that the inner space that is limited by the inner surface is surrounded by several groove shaped recesses which favors more efficient removing the residual water from this space.

In the another preferred embodiment the tank valve comprises the elongated vertical body that is formed by radially extending walls and on the lower end of the body is connected to the base ring, and the walls divide an inner surface of the base ring into openings, and on the upper end has an intermediate circular disc spaced parallel above the base ring, and one more substantially the same diameter a circular disc spaced parallel above intermediate circular disc and connected in this arrangement by a reduced diameter neck, thereby creating an annular recess between discs and for a gasket ring with an outer diameter greater than the outer diameters of circular discs.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings.

Further benefits and advantages of the present invention will become apparent after a careful reading of the detailed description with appropriate reference to the accompanying drawings.

In the drawings:
Fig. 1 exemplary shows a coffee machine isometric view.
Fig. 2 shows a bottom of the container and a water valve isometric view.
Fig. 3 shows a longitudinal section of a container bottom and a water valve, assembled together.
Fig. 4 shows a cross section of an annular holding boss and a water valve, assembled together.

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

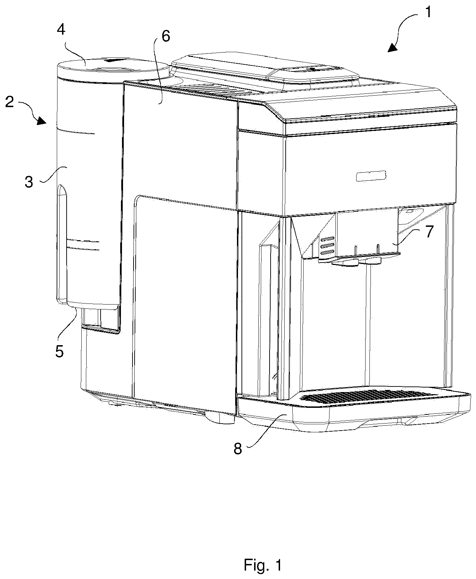

Fig. 1 shows an isometric view of a coffee machine 1 having a housing 6 and a removable water tank 2, that comprises a container 3 and a cover 4 closing off the top of the said container 3, and a container bottom 5 closing off a bottom of the container 3. The container bottom 5 is provided with an opening 23 (not shown on this figure), that is opened when the water tank 2 is placed on the coffee machine 1 and closed by a water valve 13 (not shown on this figure) when the water tank 2 is removed from the coffee machine 1. The fresh water flows from the water tank 2 to the next components of the coffee machine 1 through the opening 23. The coffee machine 1 is equipped with a drip tray 8 and a coffee outlet 7 and many components like a pump, a brewing unit, a heater, a steam relief unit, a milk frothing unit, sensors, valves etc. which are not shown on the figure but existence of which is necessary to carry out the brewing process.

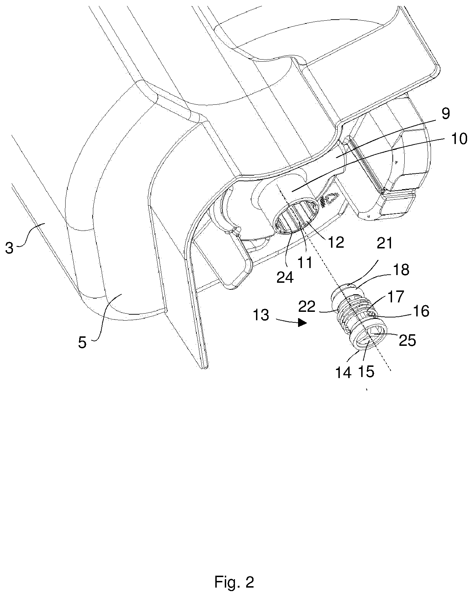

Fig. 2 shows a bottom of the container 3 and a water valve 13 in isometric view. The container 3 comprises a substantially flat the container bottom 5, which has a central cavity with lower surface 9, that is equipped with an opening 23 (not shown on this figure) and vertically protruding from it an annular valve holding boss 10 with a substantially cylindrical inner surface 11, that comprises nine groove shaped, the same, recesses 12 which are distributed regularly around the axis of the annular valve holding boss 10. The recesses 12 extends from a lower edge 24 of the inner surface 11 of the annular valve holding boss 10 and is limited from above by a shoulder 20 of the opening 23 upon which a first end of a coil spring 17 of the tank valve 13 rests. The recesses 12 are parallel to an axis of the annular valve holding boss 10. A depth of the recesses 12 increases slightly starting from its end adjacent to the shoulder 20 towards to a second end of the recess 12 to ensure technological requirements for plastic injection molding technology. The annular holding boss 10 extends down from the lower surface 9 in surrounding relation to the opening 23 with a shoulder 20. Inside the annular valve holding boss 10 a tank valve 13 is provided, which slidably fits within the inner surface 11 of the annular valve holding boss 10. The tank valve 13 comprises the elongated vertical body 16 that is formed by radially extending three walls 25 and on the lower end of the body 16 is connected to a base ring 14. The base ring 14 guides the sliding movement of the tank valve 13 inside the annular valve holding boss 10. A second end of the coil spring 17 rests on the base ring 14. The walls 25 divide an inner surface of the base ring 14 into three openings 15. On the upper end the body 16 has an intermediate circular disc 22 that is spaced parallel above the base ring 14, and one more substantially the same diameter a circular disc 21 spaced parallel above intermediate circular disc 22 and connected in this arrangement by a reduced diameter neck, thereby creating an annular recess 26 (not shown on this figure) between disc 21 and disc 22 for a gasket O-ring 18 with an outer diameter greater than the outer diameters of the disc 21 or the disc 22.

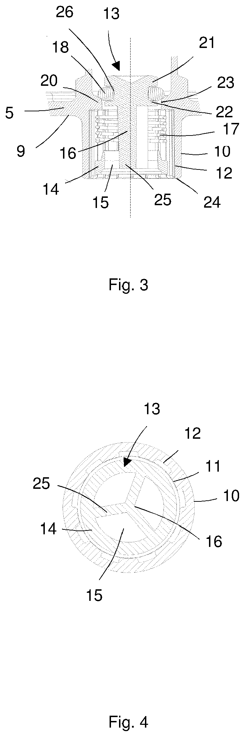

Fig. 3. shows a longitudinal section of a container bottom 5 and a water valve 13, assembled together. The container 3 (not shown on this figure) comprises a substantially flat the container bottom 5, which in the middle has a central cavity with the lower surface 9, that is equipped with an opening 23 and the annular valve holding boss 10 with the substantially cylindrical inner surface 11 nine groove shaped the same recesses 12 which are distributed regularly around the axis of the annular valve holding boss 10. The recesses 12 extend from the lower edge 24 of the inner surface 11 of the annular valve holding boss 10 and is limited from above by the shoulder 20 upon which a first end of a coil spring 17 of the tank valve 13 rests. The recesses 12 are parallel to an axis of the annular valve holding boss 10. The depth of the recesses 12 increases slightly starting from its end adjacent to the shoulder 20 towards to a second end of the recess 12 to ensure technological requirements for plastic injection molding technology. The annular holding boss 10 extends down from the lower surface 9 in surrounding relation to the opening 23 with a shoulder 20. Inside the annular valve holding boss 10 a tank valve 13 is provided, which slidably fits within the inner surface 11 of the annular valve holding boss 10. The tank valve 13 comprises the elongated vertical body 16 that is formed by radially extending three walls 25 and on the lower end of the body 16 is connected to a base ring 14. The base ring 14 guides the sliding movement of the tank valve 13 inside the annular valve holding boss 10. The second end of the coil spring 17 rests on the base ring 14. The walls 25 divide an inner surface of the base ring 14 into three openings 15. On the upper end the body 16 has an intermediate circular disc 22 that is spaced parallel above the base ring 14, and one more substantially the same diameter a circular disc 21 spaced parallel above intermediate circular disc 22 and connected in this arrangement by a reduced diameter neck, thereby creating an annular recess 26 between the disc 21 and the disc 22 for the gasket O-ring 18 with an outer diameter greater than the outer diameters of circular disc 21 or disc 22. The upper end of the body 16 is placed in the opening 23 in that way that the gasket 18 closes the said opening 23 from the above.

Fig. 4 shows a cross section of the annular holding boss 10 and the water valve 13, assembled together. The container 3 (not shown on this figure) comprises substantially flat the container bottom 5 (not shown on this figure), which has the central cavity (not shown on this figure) with the lower surface 9 (not shown on this figure), that is equipped with the opening 23 (not shown on this figure) and the annular valve holding boss 10 with substantially cylindrical inner surface 11 that comprises nine groove shaped substantially the same recesses 12 which are distributed regularly around the axis of the annular valve holding boss 10. The recesses 12 are parallel to an axis of the annular valve holding boss 10. The tank valve 13 comprises the elongated vertical body 16 that is formed by radially extending three walls 25 and on the lower end of the body 16 is connected to a base ring 14. The base ring 14 guides the sliding movement of the tank valve 13 inside the annular valve holding boss 10 along the inner surface 11. The second end of the coil spring 17 rests on the base ring 14. The walls 25 divide an inner surface of the base ring 14 into three openings 15.

Accordingly, the recesses 12 form additional air/water duct channels which facilitate the removal of water from the surrounding of the water valve 13 area. It provides space between the base ring 14 and the that allows the airflow necessary to drain all water from the valve holding boss with the water valve 13.

### List of reference signs

1 coffee machine
2 water tank
3 container
4 cover
5 container bottom
6 housing
7 coffee outlet
8 drip tray
9 lower surface
10 annular holding boss
11 inner surface
12 recess
13 water tank valve
14 base ring
16 elongated vertical body
17 spring
18 gasket
20 shoulder
21, 22 disc
23 opening
24 lower edge
25 wall
26 annular recess

## Claims

1. A water tank (2) of an automatic beverage machine, in particular an automatic coffee machine (1), with a container (3) and a cover (4) closing off the top of the said container (3), and a container bottom (5) closing off the bottom of the container (3), and the bottom (5) with a lower surface (9) comprises an opening (23) and an annular valve holding boss (10) with a substantially cylindrical inner surface (11) that extends down from the lower surface (9) in surrounding relation to the opening (23) with a shoulder (20) and inside the annular valve holding boss (10) a tank valve (13) is provided, which slidably fits within the inner surface (11) of the annular valve holding boss (10), wherein the tank valve (13) has an elongated vertical body (16), that on an upper end comprises a gasket (18) that tightly closes the opening (23) when the tank (2) is removed from the beverage machine, and a base ring (14) arranged on a lower end of the body (16) which guides the sliding movement of the tank valve (13) inside the annular valve holding boss (10), **characterized in that** the inner cylindrical surface (11) of the annular valve holding boss (10) comprises at least one groove shaped recess (12) in relation to the annular valve holding boss (10), wherein the recess (12) is provided such that water or air can flow through the recess (12) between the base ring (14) of the tank valve (13) and the annular valve holding boss (10).

2. The water tank according to claim 1, **characterized in that** the recess (12) extends from a lower edge (24) of the inner surface (11) of the annular valve holding boss (10) and is limited from above by the shoulder (20) upon which a coil spring (17) of the tank valve (13) rests and **in that** the recess (12) is parallel to an axis of the annular valve holding boss (10).

3. The water tank according to claim 1 or 2, **characterized in that** a depth of the recess (12) increases gradually starting from its end adjacent to the shoulder (20) towards to a second end of the recess (12).

4. The water tank according to any of preceding claims, **characterized in that** the annular valve holding boss (10) comprises several groove shaped recesses (12) which are distributed regularly around the axis of the annular valve holding boss (10).

5. The water tank according to any of preceding claims, **characterized in that** the tank valve (13) comprises the elongated vertical body (16) that is formed by radially extending walls (25) and on the lower end of the body (16) is connected to the base ring (14), and the walls (25) divide an inner surface of the base ring (14) into openings (15), and on the upper end has an intermediate circular disc (22) spaced parallel above the base ring (14), and one more substantially the same diameter a circular disc (21) spaced parallel above intermediate circular disc (22) and connected in this arrangement by a reduced diameter neck, thereby creating an annular recess (26) between discs (21) and (22) for a gasket ring (18) with an outer diameter greater than the outer diameters of circular discs (21) and (22).

## Patentansprüche

1. Wassertank (2) für einen Getränkeautomaten, insbesondere einen Kaffeeautomaten (1), mit einem Behälter (3) und einem Deckel (4), der die Oberseite des Behälters (3) verschließt, und einem Behälterboden (5), der die Unterseite des Behälters (3) verschließt, und wobei der Boden (5) mit einer unteren Fläche (9) eine Öffnung (23) und einen ringförmigen Ventilhalteansatz (10) mit einer im Wesentlichen zylinderförmigen Innenfläche (11) umfasst, die sich die Öffnung (23) mit einer Schulter (20) umgebend von der unteren Fläche (9) aus nach unten erstreckt, und in dem ringförmigen Ventilhalteansatz (10) ein Tankventil (13) vorgesehen ist, das verschiebbar in die Innenfläche (11) des ringförmigen Ventilhalteansatzes (10) hineinpasst, wobei das Tankventil (13) einen länglichen vertikalen Hauptteil (16), der an einem oberen Ende eine Dichtung (18) umfasst, die die Öffnung (23) fest umschließt, wenn der Tank (2) aus dem Getränkeautomaten herausgenommen wird, und einen Basisring (14) aufweist, der an einem unteren Ende des Hauptteils (16) angeordnet ist, welcher die Verschiebebewegung des Tankventils (13) in dem ringförmigen Ventilhalteansatz (10) führt, **dadurch gekennzeichnet, dass** die zylinderförmige Innenfläche (11) des ringförmigen Ventilhalteansatzes (10) in Bezug auf den ringförmigen Ventilhalteansatz (10) mindestens eine nutförmige Vertiefung (12) umfasst, wobei die Vertiefung (12) so vorgesehen ist, dass zwischen dem Basisring (14) des Tankventils (13) und dem ringförmigen Ventilhalteansatz (10) Wasser oder Luft durch sie hindurchströmen kann.

2. Wassertank nach Anspruch 1, **dadurch gekennzeichnet, dass** sich die Vertiefung (12) von einem unteren Rand (24) der Innenfläche (11) des ringförmigen Ventilhalteansatzes (10) aus erstreckt und von oben durch die Schulter (20) begrenzt ist, an der eine Schraubenfeder (17) des Tankventils (13) anliegt, und dass sie parallel zu einer Achse des ringförmigen Ventilhalteansatzes (10) verläuft.

3. Wassertank nach Anspruch 1 oder 2, **dadurch gekennzeichnet, dass** sich eine Tiefe der Vertiefung (12) von ihrem Ende an der Schulter (20) aus zu einem zweiten Ende hin allmählich vergrößert.

4. Wassertank nach einem der vorhergehenden Ansprüche, **dadurch gekennzeichnet, dass** der ringförmige Ventilhalteansatz (10) mehrere nutförmige Vertiefungen (12) umfasst, die gleichmäßig um die Achse des ringförmigen Ventilhalteansatzes (10) herum verteilt sind.

5. Wassertank nach einem der vorhergehenden Ansprüche, **dadurch gekennzeichnet, dass** das Tankventil (13) den länglichen vertikalen Hauptteil (16) umfasst, der durch sich radial erstreckende Wände (25) gebildet und an seinem unteren Ende mit dem Basisring (14) verbunden ist, und die Wände (25) eine Innenfläche des Basisrings (14) in Öffnungen (15) unterteilen, und an seinem oberen Ende eine runde Zwischenscheibe (22), die in einem Abstand parallel über dem Basisring (14) liegt, und eine weitere runde Scheibe (21) von im Wesentlichen gleichem Durchmesser aufweist, die in einem Abstand parallel über der runden Zwischenscheibe (22) liegt und bei dieser Anordnung über einen Hals von geringerem Durchmesser verbunden ist, wodurch zwischen den Scheiben (21) und (22) eine ringförmige Vertiefung (26) für einen Dichtungsring (18) mit einem Außendurchmesser entsteht, der größer ist als der Außendurchmesser der runden Scheiben (21) und (22).

## Revendications

1. Réservoir d'eau (2) d'une machine automatique de boissons, en particulier d'une machine à café automatique (1), comprenant un récipient (3) et un couvercle (4) fermant le haut du dit récipient (3), et un fond de récipient (5) fermant le fond du récipient (3),
dans lequel le fond (5) avec une surface inférieure (9) comprend une ouverture (23) et une protubérance annulaire maintenant une soupape (10) ayant une surface intérieure sensiblement cylindrique (11) qui s'étend vers le bas depuis la surface inférieure (9) de façon à entourer l'ouverture (23) avec un épaulement (20), et une soupape de réservoir (13) est agencée à l'intérieur de la protubérance annulaire maintenant une soupape (10), qui se loge de manière coulissante à l'intérieur de la surface intérieure (11) de la protubérance annulaire maintenant une soupape (10), dans lequel la soupape de réservoir (13) a un corps vertical allongé (16), qui comprend un joint (18) sur une extrémité supérieure, qui ferme hermétiquement l'ouverture (23) lorsque le réservoir (2) est enlevé de la machine à boissons, et une bague de fond (14) disposée sur une extrémité inférieure du corps (16) qui guide le mouvement coulissant de la soupape de réservoir (13) à l'intérieur de la protubérance annulaire maintenant une soupape (10),
**caractérisé en ce que** la surface cylindrique intérieure (11) de la protubérance annulaire maintenant une soupape (10) comprend au moins un creux en forme de rainure (12) en relation avec la protubérance annulaire maintenant une soupape (10), dans lequel le creux (12) est agencé de telle manière que de l'eau ou de l'air peut s'écouler à travers le creux (12) entre la bague de fond (14) de la soupape de réservoir (13) et la protubérance annulaire maintenant une soupape (10).

2. Réservoir d'eau selon la revendication 1, **caractérisé en ce que** le creux (12) s'étend à partir d'un bord inférieur (24) de la surface intérieure (11) de la protubérance annulaire maintenant une soupape (10) et est limité en dessus par l'épaulement (20) sur lequel un ressort hélicoïdal (17) de la soupape de réservoir (13) repose et **en ce que** le creux (12) est parallèle à un axe de la protubérance annulaire maintenant une soupape (10).

3. Réservoir d'eau selon la revendication 1 ou 2, **caractérisé en ce qu'**une profondeur du creux (12) augmente progressivement en partant de son extrémité adjacente à l'épaulement (20) vers une deuxième extrémité du creux (12).

4. Réservoir d'eau selon l'une quelconque des revendications précédentes, **caractérisé en ce que** la protubérance annulaire maintenant une soupape (10) comprend plusieurs creux en forme de rainure (12) qui sont répartis régulièrement autour de l'axe de la protubérance annulaire maintenant une soupape (10).

5. Réservoir d'eau selon l'une quelconque des revendications précédentes, **caractérisé en ce que** la soupape de réservoir (13) comprend le corps vertical allongé (16) qui est formé par des parois s'étendant radialement (25) et connecté, sur l'extrémité inférieure du corps, à la bague de fond (14), les parois (25) divisant une surface intérieure de la bague de fond (14) en des ouvertures (15), et comprend, sur l'extrémité supérieure, une rondelle circulaire intermédiaire (22) espacée en parallèle au-dessus de la bague de fond (14), et une autre rondelle circulaire (21) sensiblement de même diamètre espacée en parallèle au-dessus de la rondelle circulaire intermédiaire (22), qui sont reliées dans cet agencement par un col à diamètre réduit, en créant par ce moyen un creux annulaire (26) entre les rondelles (21) et (22) pour une bague d'étanchéité (18) d'un diamètre extérieur qui est supérieur aux diamètres extérieurs des rondelles circulaires (21) et (22).
